(19) Europäisches Patentamt
European Patent Office
Office européen des brevets

(11) Veröffentlichungsnummer: **0 173 213 B1**

# (12) EUROPÄISCHE PATENTSCHRIFT

(45) Veröffentlichungstag der Patentschrift: **08.11.89**

(51) Int. Cl.⁴: **G 11 B 5/702**

(21) Anmeldenummer: **85110366.3**

(22) Anmeldetag: **19.08.85**

(54) **Verfahren zur Herstellung von magnetischen Aufzeichnungsträgern.**

(30) Priorität: **31.08.84 DE 3432016**

(43) Veröffentlichungstag der Anmeldung: **05.03.86 Patentblatt 86/10**

(45) Bekanntmachung des Hinweises auf die Patenterteilung: **08.11.89 Patentblatt 89/45**

(84) Benannte Vertragsstaaten: **DE FR GB NL**

(56) Entgegenhaltungen: **EP-A- 0 083 011**

(73) Patentinhaber: **BASF Aktiengesellschaft, Carl-Bosch-Strasse 38, D-6700 Ludwigshafen (DE)**

(72) Erfinder: **Roller, Hermann, Schwedlerstrasse 118, D-6700 Ludwigshafen (DE)**
Erfinder: **Hack, Joachim, Pfarrer-Friedrich-Strasse 34, D-6700 Ludwigshafen (DE)**
Erfinder: **Woweries, Uwe, Roemerweg 46, D-6706 Wachenheim (DE)**
Erfinder: **Lehner, August, Wachenheimer Strasse 4, D-6701 Roedersheim-Gronau (DE)**
Erfinder: **Grau, Werner, Dr., Tuchbleiche 5, D-6712 Bobenheim-Roxheim (DE)**
Erfinder: **Nagel, Peter, Uhlandstrasse 5, D-7608 Willstaett (DE)**
Erfinder: **Falk, Roland, Dr., Hohbuehl 51, D-7590 Achern (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft ein Verfahren zur Herstellung von magnetischen Aufzeichnungsträgern durch Dispergieren von pulverförmigem magnetischen Material in einem in organischen Lösungsmitteln gelösten Bindemittelgemisch, im wesentlichen bestehend aus einem elastomeren Polyurethan und einem hochmolekularen hydroxylgruppenhaltigen Polymeren, unter Zugabe von Dispergierhilfsmittel und üblichen Zusatzstoffen, schichtförmiges Auftragen der zuvor mit Di- und/oder Polyisocyanaten versetzten Dispersion auf ein Trägermaterial und anschließendes Verfestigen der Schicht und Vernetzen der Bindemittelmatrix.

Durch die Entwicklungen auf dem Gebiet der magnetischen Ton-, Bild- und Datenspeicherung werden immer höhere Anforderungen an die magnetischen Aufzeichnungsträger gestellt, während gleichzeitig die angestrebte breite Nutzung dieser Technik ständige Steigerungen bezüglich der Zuverlässigkeit dieser Medien fordert. So sind die mechanischen Eigenschaften der Aufzeichnungsträger ein wesentliches Qualitätsmerkmal. Im einzelnen wird auf das Reibungsverhalten, die Abrieb- und die Verschleißfestigkeit besonders geachtet. Hinsichtlich der Verschleißfestigkeit haben sich seit langem Polyurethanelastomere als schichtbildende Bindemittel bewährt. Jedoch weisen derart aufgebaute Magnetschichten meist hohe Reibungswerte auf, die nicht selten zum Blockieren der Aufzeichnungsträger in den Laufwerken führen. Ein Nachteil, der durch die hohe Thermoplastizität der eingesetzten Polyurethane bewirkt werden kann. Es hat deshalb nicht an Versuchen gefehlt, die Reibungswerte durch das Zumischen harter Polymeren, wie Phenoxyharze, Polyvinylacetale, Polyvinyl- und -vinylidenchloride oder Polycarbonate zu verbessern. So wurden Polyurethanelastomere u.a. mit Vinyliden-Acrylnitril-Copolymeren (US-PS 3 144 352), mit Vinylchlorid-Copolymeren (DE-AS 1 282 700, DE-OS 2 255 802 und DE-OS 2 318 910) und auch mit Polyvinylformal (DE-OS 2 157 685) kombiniert. Eine weitere Verbesserung der mechanischen Eigenschaften wurde ebenfalls durch den Einsatz von vernetzten Bindemittelsystemen angestrebt, d.h. durch die Reaktion von Polymeren mit aktiven Wasserstoffatomen mit Di- und/oder Polyisocyanaten. Die Isocyanate werden hierbei den fertigen Dispersionen aus Polymeren oder Präpolymeren und magnetischem Material zudosiert und diese Mischungen anschließend auf das Trägermaterial aufgetragen. Ein möglicher Nachteil dieser Arbeitsweise ergibt sich daraus, daß durch unterschiedliche Luftfeuchtigkeit, schwankende Temperatur und geringe Qualitätsänderungen der Einsatzstoffe der Vernetzungsablauf derart beeinflußt werden kann, daß nicht mehr akzeptable Unterschiede in den Produkteigenschaften auftreten. Diese Unterschiedlichkeit, welche auf die bei der Vernetzung je nach Reaktionsablauf möglichen Reaktionsprodukte zurückzuführen sind, wirken sich in erster Linie bei den mechanischen Eigenschaften der Magnetschicht aus.

Aufgabe der vorliegenden Erfindung war es daher, ein Verfahren zur Herstellung von magnetischen Aufzeichnungsträgern bereitzustellen, mit welchem unter Beibehaltung der geforderten Aufzeichnungseigenschaften in gleichbleibender Qualität die mechanischen Eigenschaften der Aufzeichnungsschicht verbessert werden, d.h. insbesondere Magnetschichten mit geringem Reibungswiderstand und gleichzeitig hoher Verschleißfestigkeit erhalten werden.

Es wurde nun gefunden, daß sich magnetische Aufzeichnungsträger durch Dispergieren von pulverförmigem magnetischen Material in einem in organischen Lösungsmitteln gelösten Bindemittelgemisch, im wesentlichen bestehend aus einem elastomeren Polyurethan und einem hochmolekularen hydroxylgruppenhaltigen Polymeren, unter Zugabe von Dispergierhilfsmitteln und üblichen Zusatzstoffen, schichtförmiges Auftragen der zuvor mit Di- und/oder Polyisocyanaten versetzten Dispersion auf ein Trägermaterial und anschließendes Verfestigen der Schicht und Vernetzen der Bindemittelmatrix aufgabengemäß herstellen lasen, wenn die Zugabe der Di- und/oder Polyisocyanate zu der Dispersion erfolgt und vor dem Aufbringen der Dispersion auf das Trägermaterial 15 bis 55% der vorhandenen NCO-Gruppen mit dem hydroxylgruppenhaltigen Polymeren des Bindemittelgemisches reagieren.

In einer bevorzugten Ausführungsform des erfindungsgemäßen Verfahrens wird das Mengenverhältnis zwischen dem Anteil des hydroxylgruppenhaltigen Polymeren des Bindemittelgemisches und dem Di- und/oder Polyisocyanat so gewählt, daß auf eine NCO-Gruppe 1 bis 9, bevorzugt 2 bis 5 aktive Wasserstoffe entfallen.

Für die nach dem erfindungsgemäßen Verfahren der Dispersion zugesetzten und teilweise reagierenden Di- und/oder Polyisocyanate lassen sich eine Vielzahl der hierfür bekannten Substanzen verwenden. Als Polyisocyanate im Sinne der Erfindung sind auch Isocyanatprepolymere bis zu einem Molgewicht von unter 10 000, bevorzugt zwischen 500 und 3000 anzusehen. Für das erfindungsgemäße Verfahren bevorzugt sind Polyisocyanate, welche im Mittel mehr als 3, insbesondere 3 bis 6 NCO-Gruppen pro Molekül aufweisen. Als geeignet haben sich Polyisocyanate auf Basis von Toluylendiisocyanat, Hexamethylendiisocyanat oder Isophorondiisocyanat, die durch Polyaddition an Di- und Triole oder durch Biuret- und Isocyanuratbildung entstehen, erwiesen. Besonders günstig sind Additionsprodukte von Toluylendiisocyanat an Trimethylolpropan und Diolen mit 2 bis 10 C-Atomen, wenn sie so aufgebaut sind, daß die mittlere Funktionalität zwischen 3 und 6 beträgt. Bevorzugt geeignet sind Polyisocyanate, aus Additionsprodukten von Toluylendiisocyanat mit Trimethylolpropan und Diethylenglykol mit einer mittleren Funktionalität zwischen 3 und 5. Günstige TMP:DEG-Verhältnisse sind hierbei 60–80 Gew.-%: 40–20 Gew.-%, bevorzugt 65–75 Gew.-%: 35–25 Gew.-%. Sehr günstig sind auch Biuretisocyanate auf Basis von Hexamethylendiisocyanat mit einer Funktionalität zwischen 3,5

und 7. Diese Biurete können außerdem noch Urethangruppen enthalten. Gegebenenfalls ist das Molekulargewicht und die Funktionalität der Polyisocyanate über übliche Kettenverlängerungsmittel, wie z.B. Diole oder Wasser, zu vergrößern.

Die im Rahmen des erfindungsgemäsen Verfahrens für den Aufbau der Magnetschicht eingesetzte Bindemittelmischung setzt sich vor ihrer Vernetzung zweckmäßigerweise aus 60 bis 80 Gewichtsteilen eines elastomeren Polyurethans und aus 40 bis 20 Gewichtsteilen eines hochmolekularen hydroxylgruppenhaltigen Polymeren zusammen. Die Bindemittelkomponenten werden in Lösung eingesetzt. Als Lösungsmittel eignen sich die üblicherweise hierfür benutzten. Es sind dies cyclische Ether, wie Tetrahydrofuran und Dioxan, und cyclische Ketone, wie Cyclohexanon. Selbstverständlich können je nach Anwendungsgebiet auch andere stark polare Lösungsmittel, wie Dimethylformamid, N-Methylpyrrolidon, Dimethylsulfoxid oder Ethylglykolacetat verwendet werden. Ebenso ist es möglich, die genannten Lösungsmittel mit Aromaten, wie Toluol oder Xylol und mit Estern, wie Ethyl- oder Butylacetat, zu mischen.

Geeignete Polyurethanelastomere und deren Herstellung sind z.B. in der DE-AS 2 442 763 und DE-AS 2 753 694 beschrieben. Polyurethane sind dann besonders geeignet, wenn sie einen K-Wert zwischen 50 und 70 und einen Blockpunkt von mindestens 120 °C aufweisen, die Reißdehnung zwischen 100 und 1400% (DIN 53 455) und die Reißfestigkeit zwischen 40 und 95 $N/mm^2$ (DIN 53 455) liegt. Besitzen diese Polyurethane außerdem noch OH-Endgruppen, die einer Vernetzung leicht zugänglich sind, ist dies von besonderem Vorteil.

Die im Bindemittelgemisch enthaltenen hydroxylgruppenhaltigen, physikalisch trocknenden Polymeren sind ebenfalls bekannt. Es handelt sich hierbei beispielsweise um ein Polyvinylformal-Bindemittel, welches durch Hydrolyse eines Polymerisats eines Vinylesters und anschließende Umsetzung des Vinylalkohol-Polymeren mit Formaldehyd hergestellt wurde. Die Polyvinylformale haben zweckmäßigerweise einen Vinylformalgruppengehalt von mindestens 65 Gew.-% und insbesondere mindestens 80 Gew.-%. Geeignete Polyvinylformale haben einen Gehalt an Vinylalkohol-Gruppen von 5 bis 13 Gew.-%, einen Gehalt an Vinylformal-Gruppen von 80 bis 88 Gew.-%, ein spezifisches Gewicht von ca. 1,2 und eine Viskosität von 50 bis 120 Centipoise, gemessen bei 20 °C mit einer Lösung von 5 g Polyvinylformal in 100 ml Phenol-Toluol (1:1). In gleicher Weise geeignet sind neben dem Polyvinylformal Vinylchlorid-Diolmono- oder -di(meth)acrylat-Copolymerisate, die sich z.B. in an sich bekannter Weise durch Lösungscopolymerisation oder Suspensionscopolymerisation von Vinylchlorid und dem Diolmonomethacrylat oder -monoacrylat herstellen lassen. Das hierfür zum Einsatz gelangende Diolmono- oder -di-acrylat oder -methacrylat ist ein Veresterungsprodukt von Acrylsäure oder Methacrylsäure mit der entsprechenden molaren Menge an aliphatischem Diol mit 2 bis 4 C-Atomen, wie Ethylenglykol, 1,4-Butandiol und bevorzugt Propandiol, wobei das Propandiol vorzugsweise aus 1,3-Propandiol und 0 bis 50 Gew.-% 1,2-Propandiol besteht. Die Copolymerisate haben zweckmäßigerweise einen Vinylchloridgehalt von 50 bis 95 Gew.-% und einem Diolacrylat- oder -methacrylat-Gehalt von 5 bis 50 Gew.-%. Besonders geeignete Copolymerisate besitzen vorzugsweise einen Gehalt von 70 bis 90 Gew.-% Vinylchlorid und 10 bis 30 Gew.-% Diolmonoacrylat bzw. Diolmonomethacrylat. Eine 15%ige Lösung besonders geeigneter Copolymerisate wie der Vinylchlorid-Propandiolmonoacrylat-Copolymerisate in einem Gemisch aus gleichen Volumenteilen von Tetrahydrofuran und Dioxan weist bei 25 °C eine Viskosität von etwa 30 cP auf. Der K-Werte nach H. Fikentscher (Cellulosechemie 30 (1931), S. 58 ff.) der besonders geeigneten Produkte liegt zwischen 30 und 50, vorzugsweise bei etwa 40.

Außerdem lassen sich vorteilhaft Phenoxyharze, deren Konstitution mit der wiederkehrenden Formel

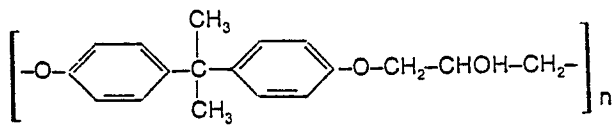

in der n annähernd gleich 100 ist, zu beschreiben ist, einsetzen. Es handelt sich hierbei um Polymere, wie sie in der DE-AS 1 295 011 beschrieben sind und wie sie unter den Handelsbezeichnungen (R)Epikote der Firma Shell Chemical Co. oder unter der Bezeichnung (R)Phenoxyharz PKHH der Union Carbide Corporation bekannt sind.

In gleicher Weise eignen sich Celluloseester-Bindemittel zur Verwendung in dem bezeichneten Bindemittelgemisch. Dies sind Veresterungsprodukte der Cellulose mit Carbonsäuren mit 1 bis 4 Kohlenstoffatomen, wie z.B. Celluloseacetat, Cellulosetriacetat, Celluloseacetopropionat, Celluloseacetobutyrat.

Die weiteren für die erfindungsgemäße Herstellung der magnetischen Aufzeichnungsträger benötigten Komponenten sind bekannt.

Als magnetische Materialien können die an sich bekannten verwendet werden, die die Eigenschaften der resultierenden Magnetschichten wesentlich beeinflussen, wie zum Beispiel Gamma-Eisen(III)-oxid, feinteiliger Magnetit, ferromagnetisches undotiertes oder dotiertes Chromdioxid kobaltmodifiziertes Gamma-Eisen(III)-oxid oder ferromagnetische Metallteilchen. Bevorzugt sind nadelförmiges Gamma-Eisen(III)-oxid sowie ferromagnetisches Chromdioxid. Die Teilchengröße beträgt im allgemeinen 0,1 bis 2 µm, bevorzugt ist der Bereich von 0,3 bis 0,8 µm.

In an sich bekannter Weise können die Magnetschichten ferner in kleinen Mengen Zusätze, wie Dispergiermittel und/oder Gleitmittel, aber auch Füllstoffe enthalten, die bei der Dispergierung der

Magnetpigmente oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin sowie Fettsäureester oder Wachse, Siliconöle, Ruß, $\alpha$-$Al_2O_3$, $\alpha$-$Fe_2O_3$, $Cr_2O_3$, ZnO, Copolymerisate auf Basis von hydrophilen ethylenisch ungesättigten Monomeren usw. Die Menge der Zusätze ist die an sich übliche. Sie liegt im allgemeinen unter 10 Gew.-%, bezogen auf die Magnetschicht.

Das Mengenverhältnis von magnetischem Material zu Bindemittel liegt zwischen 1 bis 10 und insbesondere 3 bis 6 Gewichtsteilen magnetisches Material auf ein Gewichtsteil des Bindemittelgemisches.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im allgemeinen in Stärken von 4 bis 200 µm und insbesondere von 10 bis 36 µm. In neuerer Zeit ist auch die Anwendung von Magnetschichten auf Papierträgern für Zwecke der mittleren Datentechnik bedeutend geworden; auch hierfür lassen sich die erfindungsgemäßen Beschichtungsmassen vorteilhaft verwenden. Zur Verbesserung der Haftung können diese gegebenenfalls mit einer Haftschicht versehen werden.

Zur Herstellung der Dispersion wird zweckmäßigerweise das magnetische Material zusammen mit einer Lösung der Bindemittel, dem Dispergierhilfsmittel und den anderen Zusätzen in eine Dispergiermaschine, z.B. eine Topfkugelmühle oder eine Rührwerkskugelmühle homogenisiert. Nach Erreichen einer einwandfreien Dispersion wird die Isocyanatkomponente unter Rühren der Dispersion zugegeben. Nun wird erfindungsgemäß solange gerührt bis mindestens 15 und höchstens 55% der zugesetzten Isocyanatgruppen reagiert haben. In der Regel und unter den gewählten Produktionsbedingungen ist dies spätestens nach 6 Stunden der Fall. Der NCO-Umsatz wird dabei anhand potentiometrischer Messungen verfolgt. Die Vorvernetzung kann dabei sowohl bei Raumtemperatur unter langsamem Rühren als auch, um die Reaktionsdauer abzukürzen, unter Erwärmen der Dispersion, beispielsweise auf 45 °C, oder mit Hilfe der in der Polyurethanchemie üblichen Katalysatorzugaben wie Dibutylzinndilaurat oder 1,4-Diazabicyclo-(2,2,2)-octan, vorgenommen werden. Ausschlaggebend allein ist der Grad des NCO-Umsatzes in den vorstehend beschriebenen Bereichen.

Nach Erreichen der beabsichtigten Vorvernetzung wird die Dispersion mit den üblichen Beschichtungseinrichtungen und Methoden, z.B. mittels Linealgießer, auf den nichtmagnetischen Träger aufgetragen. Bevor die flüssige Beschichtungsmischung auf dem Träger getrocknet wird, letzteres geschieht zweckmäßigerweise in 2 bis 5 min bei Temperaturen von 50 bis 90 °C, wird sie zur Erzielung hoher Magnetwerte über einem Magneten ausgerichtet. Die Magnetschichten können auf üblichen Maschinen mittels Hindurchführen zwischen geheizten und polierten Walzen, gegebenenfalls bei Anwendung von Druck und Temperaturen von 25 bis 100 °C, vorzugsweise 50 bis 80 °C, geglättet und verdichtet werden. Die Dicke der Magnetschicht beträgt im allgemeinen 1 bis 20 µm, vorzugsweise 4 bis 10 µm. Im Falle der Herstellung von Magnetbändern werden die beschichteten Folien in der Längsrichtung in den üblichen, meist nach Zoll festgelegten Breiten geschnitten.

Wesentlich für die vorteilhaften Eigenschaften der erfindungsgemäß hergestellten magnetischen Aufzeichnungsträger ist die Vorvernetzung mit Di- und/oder Polyisocyanaten. Dabei wird im Mittel jedes zweite isocyanatgruppentragende Molekül über eine Urethan- bzw. Allophanbrücke mit dem hydroxylgruppenhaltigen Polymeren verknüpft. Wichtig ist hierbei, daß die Reaktion in der Dispersion, in der die reaktiven Gruppen noch frei beweglich sind, schneller abläuft als diejenige der Isocyanatgruppen mit dem Wasser, das durch die übrigen Rezepturkomponenten eingeschleppt wird. In der trockenen Magnetschicht dagegen reagiert das noch nicht umgesetzte Polyisocyanat bevorzugt mit Wasser, da die Wassermoleküle, z.B. aus der Luft, im Gegensatz zu den OH-Gruppen der Bindemittel, weiterhin frei beweglich sind. Bei zu geringer Vernetzung der OH-Gruppen, die stets stattfindet, wenn das Polyisocyanat nur kurzfristig eingerührt oder zudosiert wird, ergibt sich ein zu weitmaschiges Netzwerk und ein zu hoher Harnstoffanteil, der sich negativ auf die Abriebbeständigkeit und das Reibungsverhalten der Bänder auswirkt.

Dagegen wirkt sich das erfindungsgemäße Verfahren, das die teilweise Vernetzung in der Dispersion und die anschließende Endvernetzung der Bindemittel in der Magnetschicht beinhaltet, überraschend vorteilhaft auf die Eigenschaften der resultierenden magnetischen Aufzeichnungsträger aus. Insbesondere werden dabei die Reibungseigenschaften und vor allem die mechanische Festigkeit der Magnetschicht verbessert.

Die in den nachstehenden Beispielen und Vergleichsbeispielen genannten Teile und Prozente beziehen sich, soweit nicht anders angegeben, auf das Gewicht. Volumenteile verhalten sich zu Gewichtsteilen wie Liter zu Kilogramm.

Beispiel 1

In eine Stahlkugelmühle von 6 l Rauminhalt, gefüllt mit 8 kg Stahlkugeln mit einem Durchmesser zwischen 4–6 mm wurden 700 g δ-Eisenoxid mit einer Koerzitivfeldstärke von 24,5 kA/m, 42 g Ölofenruß, 12 g Sojalecithin, 865 g einer 12,5%igen Lösung eines Polyurethanelastomeren gemäß DE-AS 2 753 694 in gleichen Teilen Tetrahydrofuran und Dioxan, 232 g einer 20%igen Lösung eines Phenoxyharzes in gleichen Teilen Tetrahydrofuran und Dioxan, hergestellt aus Bisphenol A und Epichlorhydrin, das noch 6 Gew.-% Hydroxylgruppen aufweist, 1 g eines handelsüblichen Silikonöls, 1 g Tributoxyethylphosphat, 2,1 g

n-Butylstearat und 737 g Tetrahydrofuran und Dioxan in gleichen Teilen 96 Stunden lang dispergiert. Anschließend wurde die Mühle geöffnet und 0,5 g 1,4-Diaza-bicyclo-(2,2,2-octan hinzugefügt. Nach Verschluß der Mühle und weiterem einstündigen Dispergieren wurde die Dispersion der Mühle entnommen und unter Druck durch ein Filter mit 5 µm Porenweite filtriert. Nach der Filtration wurden pro kg Dispersion 24,5 g einer 50%igen Lösung eines Triisocyanats aus 3 Mol Toluylendiisocyanat und 1 Mol Trimethylolpropan mit einem Rührer eingerührt. Das Rühren wurde über eine Zeitdauer von 6 Stunden fortgeführt, wobei der Dispersion in Abständen von 2 Stunden Proben entnommen und der NCO-Umsatz gemessen wurde. Der NCO-Umsatz wurde auf der Basis der von Spielberger empfohlenen Methode mit n-Dibutylamin und HCl potentiometrisch bestimmt. Nach 6 Stunden wurde ein NCO-Umsatz von 20,5% bezogen auf die zugerührte Polyisocyanatmenge ermittelt. Mit der Dispersion wurde nun eine Polyethylenterephthalatfolie von 36 µm beschichtet.

Die beschichtete Folie wurde nach Durchlaufen eines Magnetfeldes zur Ausrichtung der Magnetpigmentteilchen bei Temperaturen zwischen 50 und 90 °C getrocknet und gleichzeitig die Magnetschicht zwischen auf 50 °C beheizten Walzen unter einem Liniendruck von 200 kg/cm geglättet und anschließend in 1/2″ breite Bänder geschnitten. Die Stärke der Magnetschicht betrug nach dem Trocknen und Glätten 8 µm.

Die Bänder wurden nach 8-tägiger Lagerung bei Raumtemperatur auf Verschleißfestigkeit und Reibungsverhalten geprüft:

Auf einem Computerbandlaufwerk, Typ 6347 B der Fa. BASF, wurden jeweils 11 cm lange Bandstücke 50 000 Reversierungen unterzogen. Der Anstieg der Dropouts, der Zustand der Pegelhüllkurve, die Bandoberfläche und der Zustand des Magnetkopfsystems wurden wie folgt beurteilt:

Anstieg der Dropouts war minimal, Pegelhüllkurve nahezu unverändert. Die Bandoberfläche zeigt kaum erkennbare Polierspuren. Die Bandablagerungen am Magnetkopf waren so gering, daß sie mit 1 bewertet wurden. Im Hinblick auf die Verschleißfestigkeit wurde das Band insgesamt mit gut bis sehr gut benotet.

Zur Beurteilung des Reibungsverhaltens, d.h. zur Überprüfung der Stickingfreiheit der Bänder wurden diese in einem Laufwerk, Typ 3540 der Fa. Siemens, insgesamt 2 Stunden betrieben. Alle 10 Minuten wurde dabei am Band transportierenden Capstan, die dort bestehende Kraft in N gemessen. Je nach dem Reibungsverhalten der Bänder kann diese mit Werten von 1–30 N sehr unterschiedlich sein. Bänder mit einem Mittelwert bis 5 N werden gemäß dieser Messung als stickingfrei bezeichnet. Bänder darüber, besonders mit Werten ⩾ 10 N, neigen auf gewissen Laufwerkskonstruktionen zum Blocken, d.h. sie «kleben» am Magnetkopf fest.

Die gemäß Beispiel 1 gefertigten Bänder weisen nach dieser Messung eine durchschnittliche Reibung von 2,8 N auf und sind somit als stickingfrei zu bezeichnen.

Vergleichsversuch 1

Es wurden, wie in Beispiel 1 beschrieben, Magnetbänder hergestellt, jedoch ohne Zusatz von 0,5 g 1,4-Diaza-bicyclo-(2,2,2)-octan und mit dem Unterschied, daß die Dispersion 15 min nach Zugabe des Polyisocyanates vergossen wurde. Der NCO-Umsatz in der Dispersion war noch unmeßbar klein.

Die Prüfung der Vergleichsversuchsbänder wurde wie unter Beispiel 1 angegeben, vorgenommen.

Nach 50 000 Durchläufen war die Bandoberfläche stark zerschlissen, verbunden mit einem hohen Anstieg der Dropouts und einer deutlichen Verschlechterung der Pegelhüllkurve. Am Magnetkopf hatte sich sehr viel Bandabrieb angesammelt, der mit 6 benotet wurde. Die Verschleißfestigkeit wurde insgesamt mit ungenügend bewertet. Das Reibungsverhalten der Bänder war mit durchschnittlich 5 N in Ordnung.

Vergleichsversuch 2

Es wurden, wie in Vergleichsversuch 1 angegeben, Magnetbänder hergestellt, jedoch mit dem Unterschied, daß die Dispersion 6 Stunden nach Zugabe des Polyisocyanates bei gleichzeitig langsamem Rühren, vergossen wurde. Der gemessene NCO-Umsatz betrug 8,3%. Die Prüfung der Bänder führte zu folgenden Resultaten. Nach 50 000 Durchläufen war der Anstieg der Dropouts gering, die Pegelhüllkurve war nahezu unverändert. Die Bandoberfläche wies kaum erkennbare Polierspuren auf. Der Versuch wurde diesbezüglich mit 1 bewertet. Jedoch war die Reibung mit einem Wert von 10 N unbefriedigend. Solche Bänder können auf kritischen Laufwerken bereits zum Blocken führen.

Beispiel 2

In einer Stahlkugelmühle von 600 l Rauminhalt, gefüllt mit 800 kg Stahlkugeln mit einem Durchmesser zwischen 4–6 mm, wurden 70 kg δ-Eisenoxid mit einer Koerzitivfeldstärke von 25 kA/m, 4,5 kg Ölofenruß, 1,2 kg Sojalecithin, 86,5 kg einer 12,5%igen Lösung eines Polyurethanelastomeren gemäß DE-AS 2 753 694 in gleichen Teilen Tetrahydrofuran und Dioxan, 23,2 kg einer 20%igen Lösung eines Phenoxyharzes in gleichen Teilen Tetrahydrofuran und Dioxan, hergestellt aus Bisphenol A und Epichlorhydrin, das noch 6 Gew.-% Hydroxylgruppen aufweist, 0,1 kg eines handelsüblichen Silikonöls, 0,1 kg Tributoxethylenphosphat, 0,21 kg n-Butylstearat und 73,7 kg Tetrahydrofuran und Dioxan in gleichen Teilen 72 Stunden lang dispergiert. Die Dispersion wurde der Mühle entnommen und unter Druck durch ein Filter mit 5 µm Porenweite filtriert. Nach der Filtration wurde die Dispersion in 4 Kannen zu je 50 kg aufgeteilt und jeweils 0,997 kg einer 75%igen Lösung eines Triisocyanates aus 3 Mol Toluylendiisocyanat und 1 Mol Trimethylolpropan mit dem Schnellrührer zunächst innerhalb 5 Minuten eingerührt und dann mit 900 U/min 5 Stunden weitergerührt. Hierbei erwärmte sich die Dispersion auf 47 °C. Nach Feststellung des NCO-Umsatzes, der, auf die

zugerührte Isocyanatmenge berechnet, 31,2% betrug, wurde die Dispersion wie in Beispiel 1 beschrieben, vergossen und zu Bandmaterial verarbeitet.

Nach 50 000 Durchläufen wurden Dropout-Anstieg, Pegelhüllkurve und Bandoberfläche mit 1 bewertet. Die Reibung wurde mit 4 N gemessen.

Beispiel 3

Ein gemäss Beispiel 1 gefertigter Ansatz in einer 3 $m^3$ Mühle wurde nach 1,4-Diazo-bicyclo-(2,2,2)-octan-Zusatz und Filtration in einem 2 $m^3$ fassenden Vorratsbehälter gefüllt und dort mit dem gleichen Triisocyanat und in derselben Menge vorvernetzt. Nach 6 Stunden, als sich 23% der zugegebenen NCO-Menge umgesetzt hatten, wurde mit der Beschichtung begonnen und nach weiteren 4 Stunden als der gesamte Dispersionsvorrat verbraucht war, beendet. Zu diesem Zeitpunkt hatten sich 35% der NCO-Menge umgesetzt. Hinsichtlich der Verschleißfestigkeit wurde zwischen Beschichtungsanfang und -ende der entsprechenden Bänder kein Unterschied festgestellt. Alle wurden mit insgesamt 1 benotet. Im Reibungsverhalten wurden 3,75 N bzw. 2,8 N gemessen. Alle Bänder waren stickingfrei.

Beispiel 4

In eine Rührwerkskugelmühle mit dem Rauminhalt von 5 l, gefüllt mit 4,2 kg Glaskugeln mit einem Durchmesser von 2 mm wurden 700 g $CrO_2$ mit einer Koerzitivfeldstärke von 40 kA/m, 17,5 g eines Na-Salzes einer phosphatierten Nonylphenoxypoly(ethylenoxy)ethanol-Verbindung, 712 g eines Lösungsmittelgemisches aus gleichen Teilen Tetrahydrofuran und Dioxan, 144 g einer 10%igen Lösung eines Polyvinylformalharzes in gleichen Teilen Tetrahydrofuran und Dioxan und 404 g einer 13%igen Lösung eines Polyurethanelastomeren gemäß DE-AS 2 753 694 in gleichen Teilen Tetrahydrofuran und Dioxan eingewogen, anschließend verschlossen und 7 Stunden bei 800 U/min betrieben. Nachdem ein Probeabstrich keine Agglomerate mehr aufwies, wurde die Dispersion mit 658 g der 13%igen Lösung des Polyurethanelastomeren aus gleichen Teilen Tetrahydrofuran und Dioxan aufgelackt, sowie mit 3,5 g eines handelsüblichen Silikonöls, 3,5 g Tributoxyethylphosphat, 3,5 g Isocetylstearat und 3,5 g Perhydrosqualan versehen, erneut abgedeckt und weitere 13 Stunden gemahlen. Nun wurde die Dispersion der Mühle entnommen und unter Druck durch ein Filter mit 5 µm Porenweite filtriert. Nach der Filtration wurden pro kg Dispersion 13,5 g einer 50%igen Lösung eines Biuretisocyanates auf Basis von Hexamethylendiisocyanat mit einer Funktionalität zwischen 3,5 und 7, zugeführt. Nach einer Stunde wurde ein NCO-Umsatz von 41% festgestellt, worauf die Dispersion in einer Stärke von 4 µm auf eine Polyethylenterephthalfolie von 23 µm Dicke aufgebracht und wie vorstehend beschrieben, getrocknet und geglättet wurde. Die Walzentemperaturen betrugen 80 °C.

Unter den gleichen Bedingungen wie die vorgenannten Bänder auf dem Computerlaufwerk, Typ 6347 B der Fa. BASF, geprüft, wurde kein Verschleiß der Magnetschicht beobachtet. Die Versuchsbänder wurden mit Note 1 bewertet. Das Reibungsverhalten der Bänder mit <3N war gleichfalls in Ordnung.

**Patentansprüche**

1. Verfahren zur Herstellung von magnetischen Aufzeichnungsträgern durch Dispergieren von pulverförmigem magnetischen Material in einem in organischen Lösungsmitteln gelösten Bindemittelgemisch, im wesentlichen bestehend aus einem elastomeren Polyurethan und einem hochmolekularen hydroxylgruppenhaltigen Polymeren, unter Zugabe von Dispergierhilfsmitteln und üblichen Zusatzstoffen, schichtförmiges Auftragen der zuvor mit Di- und/oder Polyisocyanaten versetzten Dispersion auf ein Trägermaterial und anschließendes Verfestigen der Schicht und Vernetzen der Bindemittelmatrix, dadurch gekennzeichnet, daß die Zugabe der Di- und/oder Polyisocyanate zu der Dispersion erfolgt und vor dem Aufbringen der Dispersion auf das Trägermaterial 15 bis 55% der vorhandenen NCO-Gruppen mit dem hydroxylgruppenhaltigen Polymeren des Bindemittelgemisches reagieren.

2. Verfahren gemäß Anspruch 1, dadurch gekennzeichnet, daß das Mengenverhältnis zwischen dem Anteil des hydroxylgruppenhaltigen Polymeren des Bindemittelgemisches und dem Di- und/oder Polyisocyanat so gewählt wird, daß auf eine NCO-Gruppe 1 bis 9 aktive Wasserstoffe entfallen.

3. Verfahren gemäß Anspruch 1, dadurch gekennzeichnet, daß das Polyisocyanat im Mittel 3 bis 6 NCO-Gruppen pro Mol aufweist.

4. Verfahren gemäß Anspruch 1, dadurch gekennzeichnet, daß das Polyisocyanat ein Additionsprodukt von Toluylendiisocyanat mit Trimethylolpropan und Diethylenglykol mit einer mittleren Funktionalität zwischen 3 und 5 ist.

5. Verfahren gemäß Anspruch 1, dadurch gekennzeichnet, daß das Polyisocyanat ein Biuretisocyanat auf Basis von Hexamethylendiisocyanat mit einer Funktionalität zwischen 3,5 und 7 ist.

**Claims**

1. A process for the preparation of a magnetic recording medium by dispersing pulverulent magnetic material in a binder mixture which is dissolved in an organic solvent and essentially consists of an elastomeric polyurethane and a high molecular weight hydroxyl-containing polymer, with addition of dispersing assistants and conventional additives, applying a layer of the dispersion, to which a diisocyanate and/or polyisocyanate has first been added, to a base material and then solidifying the layer and crosslinking the binder matrix, wherein the diisocyanate and/or polyisocyanate is added to the dispersion and, before applying the dispersion to the base, from 15 to 55% of the NCO groups present react with the

hydroxyl-containing polymer of the binder mixture.

2. A process as claimed in claim 1, wherein the ratio of the hydroxyl-containing polymer of the binder mixture to the diisocyanate and/or polyisocyanate is so chosen as to provide from 1 to 9 active hydrogens per NCO group.

3. A process as claimed in claim 1, wherein the polyisocyanate on average has from 3 to 6 NCO groups per molecule.

4. A process as claimed in claim 1, wherein the polyisocyanate is an adduct of toluylene diisocyanate with trimethylolpropane and diethylene glycol and has a mean functionality of from 3 to 5.

5. A process as claimed in claim 1, wherein the polyisocyanate is a biuret isocyanate based on hexamethylene diisocyanate and having a functionality of from 3.5 to 7.

**Revendications**

1. Procédé de fabrication de supports d'enregistrement magnétiques par dispersion de matériau magnétique pulvérulent dans un mélange de liants dissous dans un solvant organique, en principe constitués d'un polyuréthane élastomère et d'un polymère à groupes hydroxyle, de poids moléculaire élevé, avec addition d'agents de dispersion et d'additifs usuels, application, sous forme de couche, de la dispersion, préalablement additionnée de di- et/ou polyisocyanates, sur un matériau support et ensuite solidification de la couche et réticulation de la matrice de liants, caractérisé par le fait que l'addition des di- et/ou polyisocyanates s'effectue sur la dispersion et, avant l'application de la dispersion sur le matériau support, 15 à 55% des groupes NCO présents réagissent avec le polymère à groupes hydroxyle du mélange de liants.

2. Procédé selon la revendication 1, caractérisé par le fait que le rapport quantitatif entre la portion de polymère à groupes hydroxyle de mélange de liants et le di- et/ou polyisocyanate est choisi de manière que 1 à 9 hydrogène actifs soient fournis par un groupe NCO.

3. Procédé selon la revendication 1, caractérisé par le fait que le polyisocyanate possède en moyenne 3 à 6 groupes NCO par mole.

4. Procédé selon la revendication 1, caractérisé par le fait que le polyisocyanate est un produit d'addition de diisocyanate de toluylène avec du triméthylopropane et du diéthylène glycol d'une fonctionnalité moyenne comprise entre 3 et 5.

5. Procédé selon la revendication 1, caractérisé par le fait que le polyisocyanate est un isocyanate de biuret à base de diisocyanate d'héxaméthylène, d'une fonctionnalité comprise entre 3,5 et 7.